# EUROPÄISCHE PATENTANMELDUNG

(11) **EP 1 415 957 A1**
(43) Veröffentlichungstag der Anmeldung: **06.05.2004**
(21) Anmeldenummer: 03104061.1
(22) Anmeldetag: 03.11.2003
(51) Int. Cl.: C02F 1/34

(54) **Vorrichtung und Verfahren zur Aufbereitung von Wasser**

(30) Priorität: 04.11.2002 AT 7452002
(71) Anmelder: Erwin Brunnmair, 8045 Graz (AT); Pfleger Helmut, 8211 Grosspesendorf (AT)
(72) Erfinder: Erwin Brunnmair, 8045 Graz (AT); Pfleger Helmut, 8211 Grosspesendorf (AT)
(74) Vertreter: KLIMENT & HENHAPEL

(57) **Zusammenfassung**

Vorrichtung zur Aufbereitung von Wasser mit einer Zuleitung (5) und einem Ablauf (8), wobei in einer Wirbelkammer (2) ein rotationssymmetrischer Hohlraum (7) mit einer Begrenzungsfläche (3) vorgesehen ist, deren Querschnittsfläche normal zur Rotationsachse (S) des Hohlraums (7) sich vom Bereich der Zuleitung (5) bis zum Bereich des Ablaufs (8) stetig verringert und im Bereich der Zuleitung (5) mindestens viermal so groß ist wie im Bereich des Ablaufs (8). Die Zuleitung (5) verläuft hierbei in nicht-paralleler Richtung zur Rotationsachse (S) und mündet in die äußeren Umfangsbereiche des Hohlraums (7). Des weiteren wird ein Verfahren vorgeschlagen, bei dem eine Translationsbewegung des Wassers durch tangentiale Einleitung in einen Hohlraum (7) mit rotationssymmetrischer Begrenzungsfläche (3) in eine Drehbewegung umgewandelt wird, deren Winkelgeschwindigkeit durch Verringerung des Durchmessers der Begrenzungsfläche (3) des Hohlraums (7) in Richtung eines Ablaufs (8) mindestens auf das Doppelte erhöht wird.

## Beschreibung

Die Erfindung bezieht sich auf eine Vorrichtung zur Aufbereitung von Wasser gemäß dem Oberbegriff von Anspruch 1 sowie ein Verfahren zur Aufbereitung von Wasser gemäß dem Oberbegriff von Anspruch 14.

Vorrichtungen bzw. Verfahren dieser Art zielen darauf ab, die Eigenschaften von Wasser hinsichtlich seiner Mischbarkeit mit anderen Substanzen bzw. Flüssigkeiten sowie dessen Verträglichkeit für biologische Systeme wie Pflanzen, Tiere oder auch dem menschlichen Organismus zu verbessern. Die Arbeitshypothese hierbei gründet sich auf grundlegende Betrachtungen der physikalischen Eigenschaften von Wasser.

Die in vielerlei Hinsicht bemerkenswerten Eigenschaften von Wasser lassen sich auf die Struktur des H₂O-Moleküls zurückführen, in dem die beiden H-Atome unter einem Winkel von 104,5° angeordnet sind. Die unterschiedlichen Elektronegativitäten von Sauerstoff und Wasserstoff führen zu einer Polarisierung der O-H-Bindungen, die somit auch als polare Atombindungen bezeichnet werden. Da die entgegengesetzten elektrischen Pole in ihrer räumlichen Lage nicht zusammenfallen, bildet das Wassermolekül einen Dipol und verleiht Wasser einen stark polaren Charakter. Das erklärt die Eignung von Wasser als Lösungsmittel für polare Stoffe, die elektrolytische Dissoziation von Salzen, Basen und Säuren, die Neigung zur Komplexbildung, die Hydratation und die Fähigkeit zur Ausbildung von Wasserstoff-Brückenbindungen.

Insbesondere die Ausbildung von Wasserstoff-Brückenbindungen hat weitreichende Konsequenzen und bedingt nicht zuletzt auch die Strukturen von flüssigem und festem Wasser. Zwischen dem positiv geladenen Wasserstoffatom und dem freien Elektronenpaar eines Sauerstoffatoms eines Nachbarmoleküls kommt es zu einer elektrostatischen Anziehung, wobei die Bindungsenergien der Wasserstoff-Brückenbindungen im Bereich von 40 kJ/mol liegen. Diese Wasserstoffbrücken erhöhen die Schmelztemperatur, die Siedetemperatur, die Verdampfungsenthalpie, das Dipolmoment, die elektrische Feldkonstante und die Viskosität. So müsste etwa Wasser aufgrund seiner kleinen Molekülmasse von 18 U den wesentlich geringeren Siedepunkt von -70°C aufweisen, anstatt des tatsächlich beobachteten Siedepunkts von 100°C und würde daher in der Natur gasförmig vorkommen. Dies verdeutlicht die herausragende Bedeutung der Fähigkeit des Wassers zur Bildung von Wasserstoff-Brückenbindungen.

Wasserstoff-Brückenbindungen führen aber auch zu typischen Ketten-, Schicht- und Raumnetzstrukturen. Eis etwa besitzt eine hochgeordnete kristalline Struktur mit einem Maximum an Wasserstoffbrücken. Aber auch flüssiges Wasser hat eine teilweise geordnete Struktur, in der sich ständig Gruppen von Molekülen je nach Temperatur über Wasserstoffbrücken zusammenschließen und wieder auflösen. Diese Gruppen von Wassermolekülen werden als Cluster bezeichnet, deren Größe experimentell bestimmt werden kann. So kann aus Messdaten geschlossen werden, dass sich die durchschnittliche Clustergröße bei 10°C bei etwa 50 Wassermolekülen bewegt, während dies bei 50°C nur mehr etwa 20 Moleküle sind.

Wasserstoff-Brückenbindungen sind für die Lebensvorgänge in biologischen Systemen von weitreichender Bedeutung. Sie beeinflussen Strukturen und Eigenschaften von organischen Molekülen, insbesondere von Biopolymeren wie DNA, Proteine und Polysaccharide. Erst in wässriger Lösung können diese Moleküle bestimmte Funktionen im Stoffwechsel ausüben, etwa als Enzyme, Gene oder Stützgewebe. Bei den für biologische Systeme typischen Temperaturen ist die Bildung von Molekülcluster mit bis zu 40 Wassermolekülen in der Wechselwirkung mit solchen Biopolymeren allerdings keine zu vernachlässigende Größe mehr und beeinträchtigt die Funktionsweise der unterschiedlichen Biopolymere als auch die Aufnahme von Wasser in das Innere von Zellen in nachteiliger Weise.

Somit besteht die Überlegung, durch chemische oder technische Maßnahmen die Größe dieser Molekülcluster zu verkleinern, um dessen Eigenschaften innerhalb biologischer Systeme bzw. die Mischbarkeit von Wasser mit anderen Substanzen zu verbessern. So wird etwa in JP 6315682 vorgeschlagen, mittels Ultraschall die durchschnittliche Clustergröße zu verringern. In US 5 753 124 wird hingegen vorgeschlagen, durch Anwendung eines magnetischen Feldes Molekülcluster im Wasser aufzubrechen. In EP 0 507 960 B1 wird ein chemischer Lösungsansatz verfolgt, bei dem durch Beimengung wasserlöslicher Mineralien Wasserstoffbrückenbindungen des Wassers aufgebrochen werden sollen. In EP 1 052 226 A1 wird eine Vorrichtung offenbart, die im wesentlichen einen zylindrischen Grundkörper umfasst, in dem Leitschaufeln angeordnet sind, die dem durchströmenden Wasser einen Drall verleihen. Durch diese Verwirbelung soll ebenfalls die durchschnittliche Clustergröße verringert werden.

Vorrichtungen dieser Art zeichnen sich durch einen verhältnismäßig komplizierten Aufbau aus. Es hat sich im Gegensatz dazu überraschenderweise gezeigt, dass sich der gewünschte Effekt, nämlich eine Reduktion durchschnittlicher Clustergrößen, auch durch eine relativ einfache Vorrichtung verwirklichen lässt, die somit auch preisgünstig herzustellen ist und eine breite Anwendung dieser Art der Wasseraufbereitung ermöglicht. Durch den einfachen Aufbau lässt sich die erfindungsgemäße Vorrichtung aber auch wesentlich kleiner bauen, was deren Montage an Wasserhähne, Duschköpfe und dergleichen ohne großen Aufwand ermöglicht. Diese Eigenschaften der erfindungsgemäßen Vorrichtung werden durch die kennzeichnenden Merkmale von Anspruch 1 sichergestellt.

Anspruch 1 sieht hierbei eine Vorrichtung vor, bei der in einer Wirbelkammer ein rotationssymmetrischer Hohlraum mit einer Zuleitung für Wasser und einem Ablauf für das zugeleitete Wasser sowie einer Begrenzungsfläche vorgesehen ist, deren Querschnittsfläche normal zur Rotationsachse des Hohlraums sich vom Bereich der Zuleitung bis zum Bereich des Ablaufs stetig verringert und im Bereich der Zuleitung mindestens viermal so groß ist wie im Bereich des Ablaufs, wobei die Zuleitung in nicht-paralleler Richtung zur Rotationsachse verläuft und in die äußeren Umfangsbereiche des Hohlraums mündet. Dadurch wird erreicht, dass das über die Zuleitung in den Hohlraum zugeführte Wasser in eine Rotation versetzt wird, deren Winkelgeschwindigkeit sich auf dessen Weg zum Ablauf erhöht. Wird die Querschnittsfläche normal zur Rotationsachse des Hohlraums im Bereich der Zuleitung mindestens viermal so groß wie im Bereich des Ablaufs gewählt, so wird in Verbindung mit dem erfindungsgemäßen Verfahren gemäß Anspruch 14 eine ausreichende Verwirbelung des Wassers erzielt, um bereits eine Reduktion von Molekülcluster zu bewirken. Dieser Effekt wird durch die Verwirklichung der Maßnahmen gemäß der Ansprüche 2 bis 10 verstärkt. Durch die Maßnahmen gemäß der Ansprüche 11 bis 13 wird ermöglicht, die erfindungsgemäße Vorrichtung etwa auch zur Beimengung von Substanzen zu verwenden.

Die erfindungsgemäße Vorrichtung sowie das erfindungsgemäße Verfahren werden nun anhand der beiliegenden Zeichnungen näher erläutert. Es zeigen dabei
Fig. 1 einen Schnitt durch eine Ausführungsform einer erfindungsgemäßen Vorrichtung entlang der Ebene B-B in Fig. 2,
Fig. 2 einen Schnitt durch eine Ausführungsform einer erfindungsgemäßen Vorrichtung entlang der Ebene A-A in Fig. 1,
Fig. 3 einen Schnitt durch eine weitere Ausführungsform einer erfindungsgemäßen Vorrichtung entlang der Ebene C-C in Fig. 4,
Fig. 5 einen Schnitt durch die weitere Ausführungsform einer erfindungsgemäßen Vorrichtung entlang der Ebene D-D in Fig. 3,
Fig. 6a eine weitere Ausführungsform der erfindungsgemäßen Vorrichtung im Aufriss,
Fig. 6b eine weitere Ausführungsform der erfindungsgemäßen Vorrichtung gemäß Fig. 6a im Grundriss,
Fig. 6c eine Detailansicht der erfindungsgemäßen Vorrichtung entlang der Ebene A-A in Fig. 6a, sowie
Fig. 6d eine Detailansicht der erfindungsgemäßen Vorrichtung entlang der Ebene B-B in Fig. 6b.

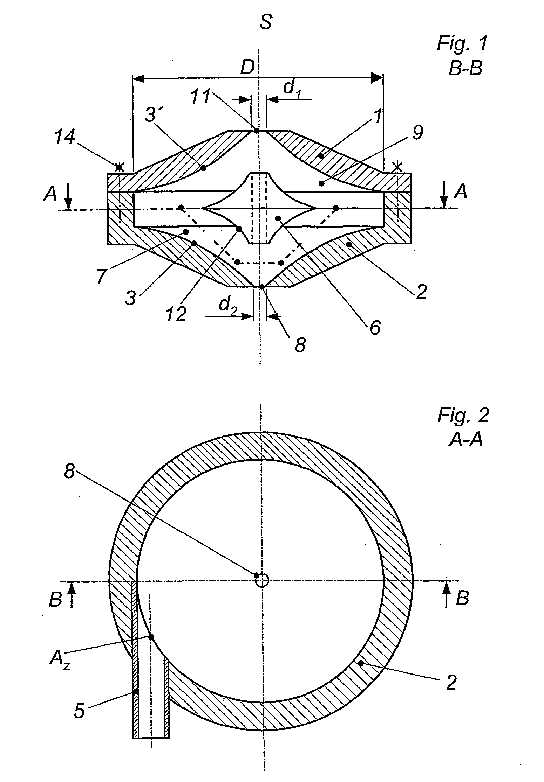

Wie in Fig. 1 dargestellt ist, sieht eine Ausführungsform der erfindungsgemäßen Vorrichtung eine rotationssymmetrische Wirbelkammer 2 vor, die im ihrem oberen Abschnitt eine zylindrische Form mit Durchmesser D aufweist und deren unterer Abschnitt sich zunehmend verjüngt, um am unteren Ende der Wirbelkammer 2 einen Ablauf 8 mit dem Durchmesser d₂ zu bilden. Dadurch wird ein rotationssymmetrischer Hohlraum 7 mit der Rotationsachse S definiert. Die Begrenzungsfläche 3 des Hohlraums 7 kann unterschiedlich gestaltet werden. Als erzeugende Kurven dienen vorzugsweise Kurven zweiter Ordnung, insbesondere Kurven gemäß einer Exponentialfunktion, einer Parabelfunktion oder einer Hyperbelfunktion. Es können aber auch Kurvenausschnitte von Pumpenschaufeln, Tragflügelprofilen oder auch Geraden bzw. beliebig daraus zusammengesetzte Kurven zum Einsatz kommen, sofern sich die dadurch definierte Begrenzungsfläche 3 vom Bereich der Zuleitung 5 zum Ablauf 8 verjüngt. Als besonders effektiv haben sich Kurvenformen erwiesen, die die in der Natur vorkommenden Wirbelformen nachahmen, wie sie etwa entstehen, wenn sich ein Wassertrichter beim Abfluss einer Badewanne bildet.

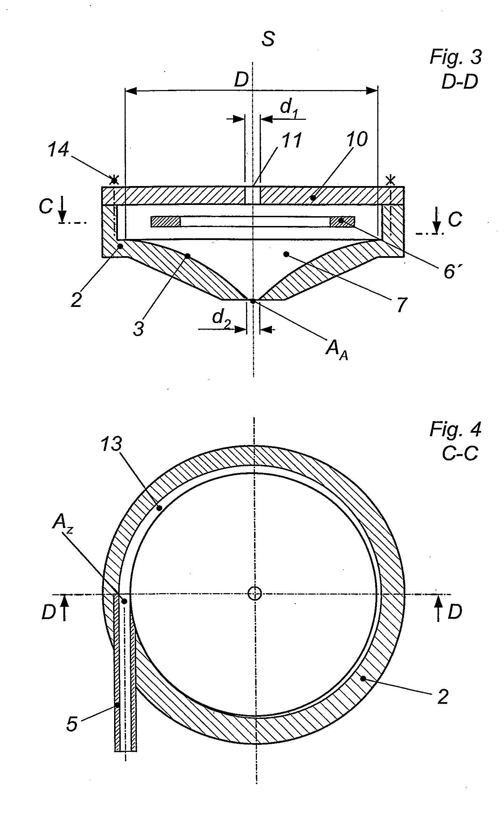

Eine Zuleitung 5 (Fig. 2), die über einen Mündungsquerschnitt A_{Z} verfügt, mündet in den zylindrischen Bereich der Wirbelkammer 2 in einer Weise, dass zugeführtes Wasser in die äußeren Umfangsbereiche des Hohlraums 7 strömt. Durch die rotationssymmetrische Form des Hohlraums 7 wird dadurch die zunächst geradlinige Bewegung des Wassers entlang der Zuleitung 5 beim Einströmen in den Hohlraum 7 in eine Rotationsbewegung versetzt, die durch einen anfänglichen Drehimpuls L₁ charakterisiert ist. Verläuft die Zuleitung 5 normal zur Rotationsachse S, so wird hierbei der anfängliche Drehimpuls L₁ bei gleichbleibendem Einleitdruck optimiert. Eine weitere Optimierung des anfänglichen Drehimpulses L₁ wird etwa dadurch erreicht, dass an der Mündung der Zuleitung 5 eine Leitfläche 13 beginnt, die entlang der Begrenzungsfläche 3 spiralförmig in Richtung des Ablaufs 8 verläuft und sich in ihrer radialen Erstreckung dabei zunehmend verjüngt (Fig. 3 und 4). Das eingeleitete Wasser wird dadurch entlang der Leitfläche 13 dem sich verjüngenden Teil der Wirbelkammer 2 zugeführt.

Vorzugsweise wird die Wirbelkammer 2 mit einem einen Hohlraum 9 aufweisenden Oberteil 1 abgedeckt, wobei die Begrenzungsfläche 3' des Hohlraums 9 in ihrer Form jener vom Hohlraum 7 entspricht (Fig. 1). Alternativ dazu kann die Wirbelkammer 2 auch mit einem Oberteil 10 abgedeckt sein, dessen Form im wesentlichen einer Scheibe entspricht (Fig. 3). Wird der Oberkörper 1, 10 mit einer Öffnung 11 mit dem Durchmesser d₁ versehen, so besteht die Möglichkeit, Substanzen oder Flüssigkeiten, die mit dem über die Zuleitung 5 zugeführten Wasser vermischt werden sollen, einzuleiten. Wirbelkammer 2 und Oberteil 1 werden vorzugsweise als separate Bauteile ausgeführt, die über Befestigungsmittel 14 verschraubbar sind.

Bei einer Anordnung gemäß Fig. 1 strömt die zugeführte Wassermenge des weiteren in Richtung des Ablaufs 8. Aufgrund des erfindungsgemäßen Merkmals der sich verjüngenden Begrenzungsfläche 3 und der Tatsache, dass der anfängliche Drehimpuls L₁ bei der Bewegung in Richtung des Ablaufs 8 erhalten bleiben muss, wird sich eine zunehmende Winkelgeschwindigkeit des Wassers einstellen. Ist etwa der Durchmesser D doppelt so groß wie der Durchmesser d₂, so wird die Winkelgeschwindigkeit der bewegten Wassermenge im Bereich des Ablaufs 8 ebenfalls verdoppelt, sofern Reibungseffekte an der Begrenzungsfläche 3 vernachlässigt werden. Das bedeutet, dass bei Erhöhung des Verhältnisses D/d₂ ein Vielfaches an Winkelgeschwindigkeiten beim Ablauf 8 erzielt werden kann.

Die erfindungsgemäße Vorrichtung ist über die Zuleitung 5 vorzugsweise mit einer Wassermenge pro Zeiteinheit zu beschicken, die die über Ablauf 8 abgeführte Wassermenge pro Zeiteinheit zumindest entspricht. Daraus folgt, dass der Querschnitt A_{Z} der Zuleitung 5 in Verbindung mit dem Einleitdruck des Wassers auf den Querschnitt A_{A} des Ablaufs 8 abgestimmt sein muss. Durch die in Anspruch 14 vorgesehene Verfahrensweise wird eine funktionstüchtige Bedienung der erfindungsgemäßen Vorrichtung aber sichergestellt, da nur bei entsprechender Beschickung eine Erhöhung der Winkelgeschwindigkeit des zugeführten Wassers von zumindest auf das Doppelte möglich ist. Der Querschnitt A_{Z} sowie die Querschnittsfläche A_{A} des Ablaufs 8 werden sich hierbei in der Regel im Bereich von Quadratmillimeter bis Quadratzentimeter bewegen. In einem gängigen Anwendungsfall der erfindungsgemäßen Vorrichtung, nämlich jenem, wo sie etwa an einem Wasserhahn montiert ist, wird beispielsweise der Hohlraum 7 durch den Oberteil 1 abgeschlossen und die erfindungsgemäße Vorrichtung durch den in der Wasserleitung vorhandenen Wasserdruck mit einer Wassermenge pro Zeiteinheit beschickt, die der über den Ablauf 8 abführbaren Wassermenge pro Zeiteinheit übersteigt. In einem anderen Anwendungsfall kann die erfindungsgemäße Vorrichtung aber auch als eigenständige Aufbereitungsanlage betrieben werden, in die bei definiertem Einleitdruck eine definierte Wassermenge pro Zeiteinheit in den Hohlraum 7 eingeleitet wird. In Verbindung mit der vorgegebenen Querschnittsfläche A_{A} des Ablaufs 8 kann so vorgesehen sein, dass bei stationärem Betrieb genau jene Menge, die pro Zeiteinheit durch den Ablauf 8 abfließen kann, über die Zuleitung 5 zugeführt wird. Die stationäre Betriebsphase schließt hierbei an eine Füllphase an, bei der eine größere Wassermenge pro Zeiteinheit über die Zuleitung 5 zugeführt wird, als durch den Ablauf 8 abfließen kann. Ziel dieser Vorgangsweise ist ein stationäres Wirbelfeld im Hohlraum 7 der Wirbelkammer 2. Idealerweise bildet sich dabei in Richtung der Rotationsachse S ein Luftschlauch, der sich vom Äußeren der Wirbelkammer 2 durch den Ablauf 8 in den Hohlraum 7 erstreckt.

Um die Wirbelbildung im Hohlraum 7 zu begünstigen, kann auch vorgesehen sein, im Inneren des durch die Wirbelkammer 2 und dem Oberteil 1 gebildeten Hohlraums einen Rotationskörper 6, 6' vorzusehen. Der Rotationskörper kann etwa in Form einer Scheibe bzw. eines Scheibenrings 6' ausgebildet sein (Fig. 3), er kann aber auch in Form eines Rotationskörpers 6 geformt sein, dessen äußere Begrenzungsfläche 12 in ihrer Form einem Abschnitt der Begrenzungsfläche 3 des Hohlraums 7 entspricht (Fig. 1). Der Rotationskörper 6, 6' kann entweder lagerungsfrei im durch die Wirbelkammer 2 und dem Oberteil 1 gebildeten Hohlraum angeordnet sein, oder in diesem Hohlraum rotierbar fixiert sein.

Wie bereits erwähnt wurde, wird sich bei Durchlaufen der eingeleiteten Wassermenge durch die erfindungsgemäße Vorrichtung eine zunehmende Winkelgeschwindigkeit des Wassers einstellen. Die Winkelgeschwindigkeit der bewegten Wassermenge ist allerdings im Hohlraum 7 entlang des Querschnitts normal zur Rotationsachse S nicht konstant. Wie sich aus theoretischen Betrachtungen der Turbulenztheorie ergibt, ist die Winkelgeschwindigkeit des Wassers im Nahbereich zur Rotationsachse S um ein Vielfaches größer als im Nahbereich zur Begrenzungsfläche 3, wo sie im unmittelbaren Kontaktbereich, der sogenannten sublaminaren Grenzschicht, schließlich gegen Null konvergiert. Dadurch stellen sich nicht nur große Geschwindigkeitsgradienten in horizontaler Richtung, sondern auch in vertikaler Richtung ein, was bereits im Bereich relativ geringer Absolutwerte für die Winkelgeschwindigkeiten starke hydrodynamische Scherkräfte bewirkt. Molekülcluster im Wasser werden somit gewissermaßen "zerrissen".

Die qualitative Veränderung der physikalischen Eigenschaften nach Durchlaufen einer erfindungsgemäßen Vorrichtung lassen sich auch experimentell bestimmen, etwa durch Messung der Lichtabsorption. Molekülcluster in Wasser besitzen Anregungsenergien im Bereich des UV-Spektrums. Sollte die durchschnittliche Größe von Molekülcluster bei Durchlaufen der erfindungsgemäßen Vorrichtung tatsächlich abnehmen, so müsste die Durchlässigkeit von Wasser im UV-Bereich von Licht zunehmen. Entsprechende Messdaten des Anmelders bestätigen diesen Sachverhalt.

Die außergewöhnliche Effektivität einer dermaßen einfachen Vorrichtung hinsichtlich der Zerstörung von Molekülcluster wie jene gemäß der Erfindung begründet sich insbesondere darauf, dass eine turbulente Wirbelströmung erzeugt wird. Turbulenz ist hierbei in physikalischer Hinsicht ein Strömungszustand des Wassers bei sehr hohen Reynoldszahlen, im Gegensatz zum annähernd laminaren Strömungszustand in der Zuleitung 5, die durch geringe Reynoldszahlen charakterisiert ist. Turbulenzen entstehen primär in Wirbelströmungen und sind in mathematischer Hinsicht durch die wesentlichen Eigenschaften einer Raum-zeitlich irregulären Bewegung sowie einer Existenz einer Hierarchie von Längen- und Zeitskalen gekennzeichnet. Letzteres gestattet die Definition von drei unterschiedlichen Spektralbereichen von Wirbeln (die "Größe" von Wirbeln). Für die erfindungsgemäße Vorrichtung (deren Größenordnung sich im Bereich von Zentimetern bis Dezimeter bewegt) sind lediglich zwei davon entscheidend, nämlich der "inertielle Bereich" und der "Dissipationsbereich". Der inertielle Bereich ist ein durch Nichtlinearität geprägter, trägheitsbeherrschter Bereich, in dem sich das Wirbelfeld statistisch selbstähnlich verhält. In diesem Bereich wird über makroskopische Wirbel Energie eingebracht, die über kleine Wirbel aufgrund der Viskosität des Wassers wieder abgegeben wird. Sind die Wirbel entsprechend des betrachteten Systems klein, so bewegt sich das Wirbelfeld im Dissipationsbereich, in dem die Energie der Wirbel aufgrund molekularer Reibung in Wärme umgewandelt wird. Die in erfindungsgemäßen Vorrichtungen durch Zuleitung von Wasser in einen rotationssymmetrischen Hohlraum 7 im makroskopischen Maßstab eingebrachte Rotationsenergie wird somit durch nichtlineare Wechselwirkungsprozesse zu immer kleiner werdenden Wirbeln transferiert, bevor sie in Wärmeenergie dissipiert werden kann. Dieser Energietransportvorgang wird auch als Kaskadierung der Energie bezeichnet. Mathematische Betrachtungen der erfindungsgemäßen Vorrichtung mit Durchmesser D im Größenbereich von Zentimetern bis Dezimetern (eventuell auch im Meterbereich) und bei einem Verhältnis von D zu d₂ von mindestens zwei legen es nahe, dass die anfänglich eingebrachte Rotationsenergie in ausreichendem Ausmaß zu kleineren Skalen transferiert werden kann, um eine notwendige Energiedichte im Bereich von etwa 40 kJ/mol zu erzielen. Damit wird der Energiebereich der Wasserstoff-Brückenbindungen erreicht, wodurch sie aufgebrochen werden können.

Die erfindungsgemäße Vorrichtung bzw. das erfindungsgemäße Verfahren sollen im folgenden anhand eines konkreten Ausführungsbeispiels illustriert werden, wenngleich auch andere Ausführungsformen zur Verwirklichung der erfindungsgemäßen Vorrichtung bzw. des erfindungsgemäßen Verfahrens möglich sind.

### Ausführungsbeispiel:

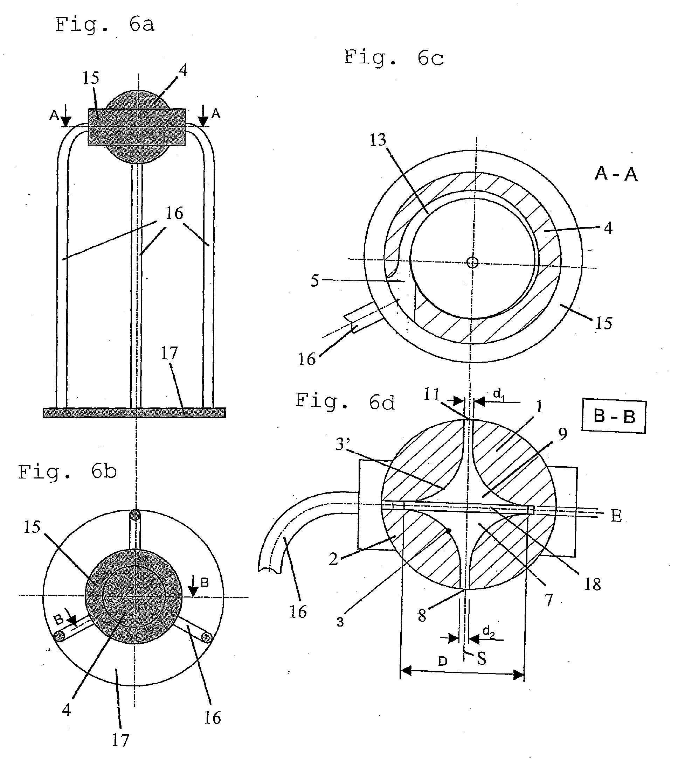

Fig. 6a zeigt eine mögliche Verwirklichung der erfindungsgemäßen Vorrichtung bzw. des erfindungsgemäßen Verfahrens. Hierbei ist die Wirbelkammer 2 in ihrer äußeren Form als Kugel 4 mit einem äußeren Durchmesser von etwa 100 mm ausgeführt, die in ihrem Äquatorialbereich von einer in ihrer äußeren Form zylinderförmigen Ummantelung 15 umgeben ist. Die zylinderförmige Ummantelung 15 und somit auch die Kugel 4 wird von Haltestangen 16 gehalten, wobei die Haltestangen 16 an einer Grundplatte 17 fest montiert sind. Die Grundplatte 17 ist etwa als Scheibe mit einem Durchmesser von 200 mm ausgeführt, die Gesamthöhe der Vorrichtung gemäß Fig. 6a beträgt etwa 400 mm. Durch eine der Haltestangen 16 ist ein Schlauch geführt (in Fig. 6 nicht dargestellt), der an einem Ende mit einem Wasserhahn verbunden werden kann und an seinem anderen Ende in die Zuleitung 5 mündet. Die Zuleitung 5 wird in diesem Ausführungsbeispiel durch einen Hohlraum im Nahebereich der Äquatorebene E der Kugel 4 gebildet (siehe Fig. 6c und 6d). Die Zuleitung 5 mündet in einen weiteren Hohlraum innerhalb der Kugel, der sich in die Abschnitte 7, 9 und 18 gliedert. Der Mündungspunkt der Zuleitung 5 befindet sich dabei im Hohlraumabschnitt 18 und weist einen Querschnitt von z.B. 4 mm Länge und 3 mm Breite auf. Wahlweise kann sich in der Zuleitung 5 auch eine Rechteckdüse befinden (in Fig. 6 nicht dargestellt). Der Abschnitt 18 hat hierbei zylindrische Form, wobei sich der radiale Abstand der äußeren Begrenzungsfläche des Abschnittes 18 vom Bereich der Zuleitung 5 entlang des Umfanges bis zum Bereich der Zuleitung 5 stetig verringert (siehe insbesondere Fig. 6c). Dadurch wird die Leitfläche 13 gebildet.

Der Hohlraumabschnitt 7 weist die Begrenzungsfläche 3 auf, die im dargestellten Fall hyperbolische Form besitzt. Wird im Schnitt gemäß Fig. 6d etwa die als Linie erscheinende Äquatorialebene E als x-Achse und die Rotationsachse S als y-Achse definiert, so erscheint die Begrenzungsfläche 3 in Fig. 6d als reziproke Funktion, bei der das Produkt der x- und y-Koordinaten der Punkte der Funktion konstant ist, z.B. 50 mm² beträgt. Die Begrenzungsfläche 3 erfüllt somit gemäß der in Fig. 6d dargestellten Ausführungsform die Bedingung, dass das Produkt der x-, y- und z-Koordinaten der Punkte der Begrenzungsfläche 3 gleich einem konstanten Wert ist.

Die Wirbelkammer 2 verfügt über einen Auslass 8, dessen Durchmesser d₂ z.B. 4 mm beträgt. Der Durchmesser D der Wirbelkammer 2 im Bereich der Zuleitung 5 beträgt z.B. 80 mm. Durch das Verhältnis von Durchmesser D zu Durchmesser d₂ von 20 wird eine zwanzigfache Erhöhung der Winkelgeschwindigkeit am Auslass 8 im Vergleich zu jener im Bereich der Zuleitung 5 der Wirbelkammer 2 erreicht. Die Wirbelkammer 2 ist des weiteren mit einem Oberteil 1 abgedeckt, dessen innere Begrenzungsfläche 3' in ihrer Form jener der Begrenzungsfläche 3 entspricht. Der Normalabstand zwischen den Begrenzungsflächen 3 und 3' beträgt an ihren der Äquatorialebene E nächstliegenden Punkten z.B. 3 mm. Im Ausführungsbeispiel gemäß Fig. 6 ist auch der Oberteil 1 mit einer Öffnung 11 mit einem Durchmesser von 3 mm versehen, in die etwa eine Zufuhrvorrichtung (in Fig. 6 nicht dargestellt) für eine Flüssigkeit oder Substanzen, die mit dem über die Zuleitung 5 eingeleiteten Wasser vermischt werden sollen, eingesetzt werden kann. In diesem Fall kann sich etwa im Bereich der Öffnung 11 ein Gewinde befinden, um über eine Schraubverbindung diese Zufuhrvorrichtung an der Kugel 4 zu montieren.

Beim Betrieb dieser erfindungsgemäßen Vorrichtung wird Wasser von einem Wasserhahn über den in einer der Haltestangen 16 geführten Schlauch in die Zuleitung 5 eingeleitet. Der Einleitdruck wird sich bei den hier gewählten Abmessungen bei etwa 3 bar Überdruck (3*10⁵ Pa) bewegen. Somit werden etwa 8-10 Liter pro Minute in den Hohlraumabschnitt 18 gelangen. Dividiert man die eingeleitete Wassermenge pro Zeiteinheit durch die Querschnittsfläche der Zuleitung 5 an ihrer Mündung in den Hohlraumabschnitt 18, so kann leicht die Einströmgeschwindigkeit des Wassers in die Wirbelkammer 2 errechnet werden. Gemeinsam mit dem Durchmesser D der Wirbelkammer 2 ergibt sich in diesem Ausführungsbeispiel eine anfängliche Winkelgeschwindigkeit von bis zu 350 s⁻¹, die bei den hier gewählten Abmessungen auf bis zu 7000 s⁻¹ im Bereich des Abflusses 8 erhöht wird. Das diesen extremen physikalischen Bedingungen ausgesetzte und so aufbereitete Wasser verlässt die Wirbelkammer 2 über den Abfluss 8 und wird etwa in einem darunter befindlichen Auffangbehälter (in Fig. 6 nicht dargestellt) gesammelt.

Durch eine Verwirbelung des Wassers durch die erfindungsgemäße Vorrichtung bzw. des erfindungsgemäßen Verfahrens kann eine zumindest teilweise Auflösung von Molekülcluster im aufbereiteten Wasser erreicht werden, wodurch sich etwa Mischungen mit anderen Substanzen oder Flüssigkeiten besser herstellen lassen. Zudem ist nachweisbar, dass die Verringerung der durchschnittlichen Clustergrößen eine messbare Erhöhung der Transparenz des Wassers im UV-Bereich bewirkt. Diese Verringerung der durchschnittlichen Clustergrößen bewirkt zudem eine bessere Aufnahme des Wassers durch organische Zellen, was unter anderem durch Keimfähigkeitsversuche von Pflanzensamen gezeigt wurde. Generell kann bei solcherart aufbereitetem Wasser von einer besseren Resorptionsfähigkeit durch biologische Systeme wie Pflanzen, Tiere oder auch dem Menschen ausgegangen werden.

## Patentansprüche

1. Vorrichtung zur Aufbereitung von Wasser mit einer Zuleitung (5) und einem Ablauf (8), **dadurch gekennzeichnet, dass** in einer Wirbelkammer (2) ein rotationssymmetrischer Hohlraum (7) mit einer Begrenzungsfläche (3) vorgesehen ist, deren Querschnittsfläche normal zur Rotationsachse (S) des Hohlraums (7) sich vom Bereich der Zuleitung (5) bis zum Bereich des Ablaufs (8) stetig verringert und im Bereich der Zuleitung (5) mindestens viermal so groß ist wie im Bereich des Ablaufs (8), wobei die Zuleitung (5) in nicht-paralleler Richtung zur Rotationsachse (S) verläuft und in die äußeren Umfangsbereiche des Hohlraums (7) mündet.

2. Verwirbelungsvorrichtung nach Anspruch 1, **dadurch gekennzeichnet, dass** die Zuleitung (5) normal zur Rotationsachse S verläuft.

3. Verwirbelungsvorrichtung nach Anspruch 1 oder 2, **dadurch gekennzeichnet, dass** die Begrenzungsfläche (3) des Hohlraums (7) im Bereich der Zuleitung (5) zylinderförmig ist.

4. Verwirbelungsvorrichtung nach einem der Ansprüche 1 bis 3, **dadurch gekennzeichnet, dass** die rotationssymmetrische Begrenzungsfläche (3) über einen Abschnitt verfügt, deren Erzeugende eine Kurve zweiter Ordnung ist.

5. Verwirbelungsvorrichtung nach Anspruch 4, **dadurch gekennzeichnet, dass** die rotationssymmetrische Begrenzungsfläche (3) über einen Abschnitt verfügt, deren Erzeugende eine parabolische Form besitzt.

6. Verwirbelungsvorrichtung nach Anspruch 4, **dadurch gekennzeichnet, dass** die rotationssymmetrische Begrenzungsfläche (3) über einen Abschnitt verfügt, deren Erzeugende eine hyperbolische Form besitzt.

7. Verwirbelungsvorrichtung nach einem der Ansprüche 1 bis 3, **dadurch gekennzeichnet, dass** die rotationssymmetrische Begrenzungsfläche (3) über einen Abschnitt verfügt, deren Erzeugende eine exponentielle Form besitzt.

8. Verwirbelungsvorrichtung nach einem der Ansprüche 1 bis 7, **dadurch gekennzeichnet, dass** sich im Hohlraum (7) ein Rotationskörper (6') befindet, dessen Form im wesentlichen einem Scheibenring entspricht.

9. Verwirbelungsvorrichtung nach einem der Ansprüche 1 bis 7, **dadurch gekennzeichnet, dass** sich im Hohlraum (7) ein Rotationskörper (6) befindet, dessen äußere Begrenzungsfläche (12) in ihrer Form einem Abschnitt der Begrenzungsfläche (3) des Hohlraums (7) entspricht.

10. Verwirbelungsvorrichtung nach einem der Ansprüche 1 bis 9, **dadurch gekennzeichnet, dass** an der Mündung der Zuleitung (5) eine Leitfläche (13) beginnt, die entlang der Begrenzungsfläche (3) spiralförmig in Richtung des Ablaufs (8) verläuft und sich in ihrer radialen Erstreckung dabei zunehmend verjüngt.

11. Verwirbelungsvorrichtung nach einem der Ansprüche 1 bis 10, **dadurch gekennzeichnet, dass** die Wirbelkammer (2) mit einem einen Hohlraum (9) aufweisenden Oberteil (1) abgedeckt ist, wobei die Begrenzungsfläche (3') des Hohlraums (9) in ihrer Form jener vom Hohlraum (7) entspricht.

12. Verwirbelungsvorrichtung nach einem der Ansprüche 1 bis 10, **dadurch gekennzeichnet, dass** die Wirbelkammer (2) mit einem Oberteil (10) abgedeckt ist, dessen Form im wesentlichen einer Scheibe entspricht.

13. Verwirbelungsvorrichtung nach Anspruch 11 oder 12, **dadurch gekennzeichnet, dass** der Oberkörper (1, 10) über eine Öffnung (11) verfügt.

14. Verfahren zur Aufbereitung von Wasser, **dadurch gekennzeichnet, dass** eine Translationsbewegung des Wassers durch tangentiale Einleitung in einen Hohlraum (7) mit rotationssymmetrischer Begrenzungsfläche (3) in eine Drehbewegung umgewandelt wird, deren Winkelgeschwindigkeit durch Verringerung des Durchmessers der Begrenzungsfläche (3) des Hohlraums (7) in Richtung eines Ablaufs (8) mindestens auf das Doppelte erhöht wird.
